# EUROPEAN PATENT APPLICATION

(11) **EP 2 640 029 A1**
(43) Date of publication of application: **18.09.2013**
(21) Application number: 11840026.6
(22) Date of filing: 01.06.2011
(51) Int. Cl.: H04L 29/06

(54) **SYSTEM AND METHOD FOR TRANSMITTING MULTIPAGE MULTIMEDIA MESSAGES, SESSION INITIATION PROTOCOL TERMINAL AND MULTIMEDIA MESSAGE PROXY SERVER**

(30) Priority: 12.11.2010 CN 201010542650
(71) Applicant: ZTE Corporation, Shenzhen, Guangdong 518057 (CN)
(72) Inventor: CHEN, Hongling, Shenzhen Guangdong 518057 (CN)
(74) Representative: Price, Nigel John King
(86) International application number: PCT/CN2011/075120
(87) International publication number: WO 2012/062104

(57) **Abstract**

The present invention discloses a system and a method for transmitting multipage multimedia messages, a Session Initiation Protocol (SIP) terminal (10) and a multimedia message proxy server (20), wherein the system comprises the SIP terminal (10) and the multimedia message proxy server (20); the SIP terminal (10) is configured to implement conversation consultation and media consultation with the multimedia message proxy server (20) through an SIP protocol and a Session Description Protocol (SDP), and to establish a Message Session Relay Protocol (MSRP) transmission channel with the multimedia message proxy server (10); and the multipage multimedia messages between the SIP terminal (10) and the multimedia message proxy server (20) are transmitted through the MSRP transmission channel. The present invention overcomes the disadvantage that the self-defined private protocol adopted in the relative art does not have character of standardization and intercommunity is overcome, so the communication protocol between the SIP terminal (10) and the multimedia message proxy server (20) has character of standardization, intercommunity and normalization.

## Description

### Field of the Invention

The present invention relates to the communication field, and more particularly to a system and a method for transmitting multipage Multimedia Message Service (MMS), a Session Initiation Protocol (SIP) terminal and a MMS proxy server.

### Background of the Invention

In IP Multimedia Subsystem (IMS) services, an SIP terminal is provided with multiple communication capabilities, e.g. an instant messaging, a calling, a multimedia conferencing, a text messaging and a multimedia messaging etc., wherein the multimedia messaging has been provided to users as a necessary function. The MMS function provides a method for instant multimedia (medias including texts, images, voices and animations etc.) transmission between terminals to bring great convenience to people's life.

In IMS systems for transmitting multipage MMS in the current IMS environment, most SIP terminals apply self-defined private protocol messages to send multipage MMSs to proxy servers. These self-defined private protocols do not have standardization and intercommunity. Moreover, since the SIP terminals apply the self-defined private protocol messages to send the multipage MMS to the MMS proxy servers, the MMS proxy servers need to parse these private protocol messages to obtain multipage MMSs, then encapsulate the multipage MMSs into standard MM7 protocol messages (the MMS proxy servers communicate with a MMS service center through a MM7 protocol) and subsequently send the MM7 protocol messages to the MMS service center, thus resulting in a relatively large load of the MMS proxy servers.

### Summary of the Invention

The present invention provides a system and method for transmitting multipage MMSs, an SIP terminal and a MMS proxy server to at least solve one of the problems above.

According to an aspect of the present invention, a system for transmitting multipage MMSs is provided, comprising: a Session Initiation Protocol (SIP) terminal and a MMS proxy server, wherein the SIP terminal is configured to implement a conversation consultation and a media consultation with the MMS proxy server through an SIP and a Session Description Protocol (SDP), and configured to establish a Message Session Relay Protocol (MSRP) transmission channel with the MMS proxy server; wherein a multipage MMS between the SIP terminal and the MMS proxy server is transmitted through the MSRP transmission channel.

the SIP terminal is configured to perform the conversation consultation and the media consultation with the MMS proxy server through the SIP message and the SDP message after establishing and editing the multipage MMS, to establish the MSRP transmission channel and transmit the edited multipage MMS to the MMS proxy server through the MSRP transmission channel; and the MMS proxy server is configured to transmit the received multipage MMS to a MMS service center directly and transparently.

The MMS proxy server is configured to, after receiving the multipage MMS transmitted by the MMS center to the SIP terminal, use an SIP message to notify the SIP terminal, and transmit the multipage MMS to the SIP terminal through the MSRP transmission channel; and the SIP terminal is configured to, after receiving the notification, perform the conversation consultation and the media consultation with the MMS proxy server through an SIP message and an SDP message, and establish the MSRP transmission channel.

According to another aspect of the present invention, an SIP terminal is provided, comprising: a consultation module, configured to perform a conversation consultation and a media consultation with a Multimedia Message Service (MMS) proxy server through an SIP and a Session Description Protocol (SDP); an establishing module, configured to, after the consultation module finishes the conversation consultation and the media consultation, establish a Message Session Relay Protocol (MSRP) transmission channel with the MMS proxy server; and a transmitting module, configured to, through the MSRP transmission channel, send a multipage MMS to the MMS proxy server or receive a multipage MMS from the MMS proxy server.

According to a third aspect of the present invention, a MMS proxy server is provided, comprising: a consultation module, configured to perform a conversation consultation and a media consultation with a Session Initiation Protocol (SIP) terminal through an SIP and a Session Description Protocol (SDP); and atransmitting module, configured to, through a Message Session Relay Protocol (MSRP) transmission channel with the SIP terminal, send a multipage MMS to the SIP terminal or receive a multipage MMS from SIP terminal, wherein the MSRP transmission channel is established by the SIP terminal after the conversation consultation and the media consultation, are finished.

According to a fourth aspect of the present invention, a method for transmitting multipage MMS is provided, comprising: a Session Initiation Protocol (SIP) terminal performing a conversation consultation and a media consultation with an MMS proxy server through a SIP and a Session Description Protocol (SDP) and establishing a Message Session Relay Protocol (MSRP) transmission channel with the MMS proxy server; and transmitting a multipage MMS between the SIP terminal and the MMS proxy server though the MSRP transmission channel.

Before the SIP terminal performs the conversation consultation and the media consultation with the MMS server through the SIP and the SDP, the method further comprises: the SIP terminal establishing and editing the multipage MMS; and transmitting the multipage MMS between the SIP terminal and the MMS proxy server though the MSRP transmission channel further comprises: the SIP terminal transmitting the edited multipage MMS to the MMS proxy server though the MSRP transmission channel.

After the SIP terminal transmitting the edited multipage MMS to the MMS proxy server though the MSRP transmission channel, the method further comprises: the multimedia message proxy server transmitting the received multipage MMS to the MMS service center directly and transparently.

Before the SIP terminal performing the conversation consultation and the media consultation with the MMS proxy server through the SIP and the SDP, the method further comprises: after receiving a multipage MMS which needs to be sent to the SIP terminal, the MMS service center forwarding the multipage MMS which needs to be sent to the SIP terminal to the MMS proxy server; and the MMS proxy server receiving the multipage MMS which needs to be sent to the SIP terminal and notifying the SIP terminal through the SIP message.

In the method above, transmitting the multipage MMS between the SIP terminal and the multimedia message proxy server through the MSRP transmission channel comprises: the MMS proxy server transmitting the multipage MMS to the SIP terminal through the MSRP transmission channel.

In the method above, transmitting the multipage MMSs through the MSRP transmission channel includes: transmitting the multipage MMSs through the MSRP transmission channel comprises: converting the multipage MMS into multipage MMS format integration information and media contents that satisfy the Synchronized Multimedia Integration Language (SMIL) format, wherein the multipage MMS format integration information comprises: page number information of the multipage MMSs, media information comprised in the MMSs of each page and the location, fond properties, image properties, and playing speed of media information in an interface of the SIP terminal; and transmitting the multipage MMS format integration information and the media contents through the MSRP transmission channel.

In the method above, the multipage MMS format integration information is transmitted in a form of a media package during the transmission.

By means of the present invention, the conversation consultation and the media consultation are performed between an SIP terminal and a MMS proxy server through an SIP and an SDP. After the consultation, an MSRP transmission channel which satisfies MSRP is established between the SIP terminal and the MMS proxy server and transmission of multipage MMSs can be realized between the SIP terminal and the MMS proxy server through the MSRP transmission channel so as to transmit the multipage MMSs between the SIP terminal and the MMS proxy server through such standard normalization protocols as SIP protocols, SDP protocols and MSRP protocols. The present invention overcomes the disadvantage that the self-defined private protocol adopted in the prior art does not have character of standardization and intercommunity, so the communication protocol between the SIP terminal and the MMS proxy server has character of standardization, intercommunity and normalization.

### Brief Description of the Drawings

The accompanying drawings illustrated here provide further understanding to the present invention and constitute a part of the application. The exemplary embodiments of the present invention and the illustrations thereof are used for explaining the present invention, instead of constituting an improper limitation to the present invention. In the accompanying drawings:
Fig. 1 is a structural diagram of a system for transmitting multipage MMSs according to an embodiment of the present invention;
Fig. 2 is a structural diagram of an SIP terminal according to an embodiment of the present invention;
Fig. 3 is a structural diagram of a MMS proxy server according to an embodiment of the present invention;
Fig. 4 is a flowchart of a method for transmitting multipage MMSs according to an embodiment of the present invention;
Fig. 5 is a flowchart illustrating transmission of multipage MMSs by an SIP terminal in a method for transmitting multipage MMSs according to a preferred embodiment of the present invention; and
Fig. 6 is a flowchart illustrating reception of multipage MMSs by an SIP terminal in a method for transmitting multipage MMSs according to a preferred embodiment of the present invention.

### Detailed Description of the Embodiments

The present invention will be described in details below with reference to the accompanying drawings and in combination with the embodiments. It should be noted that, if there is no conflict, the embodiments of the application and the characteristics in the embodiments can be combined with each other.

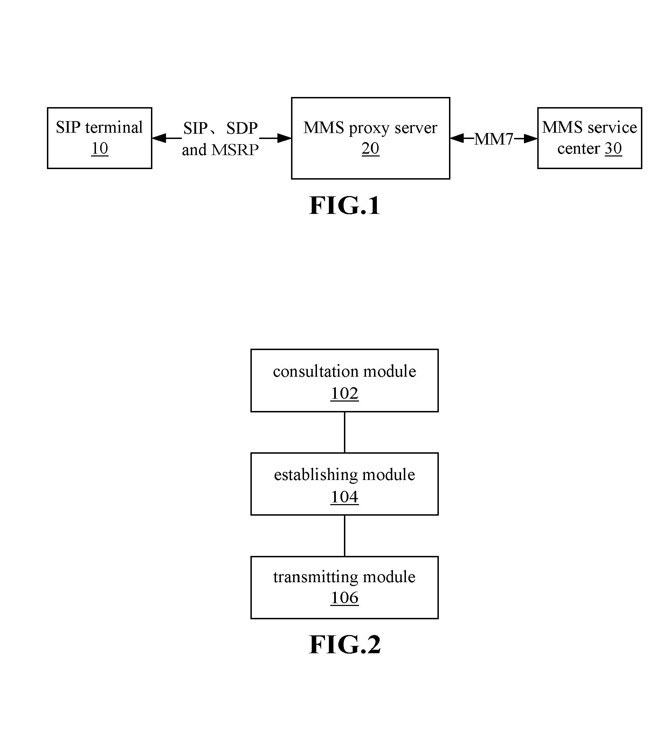

Fig. 1 is a structural diagram of a system for transmitting multipage MMSs according to an embodiment of the present invention. As shown in Fig. 1, the transmission system includes: an SIP terminal 10, a MMS proxy server 20 and a MMS service center 30, wherein the SIP terminal 10 communicates with the MMS proxy server 20 through an SIP protocol, an SDP protocol and an MSRP protocol. The MMS proxy server **20** still communicates with the MMS service center 30 through an MM7 protocol. In this way, during a transmission process of multipage MMSs, the SIP terminal **10** in the transmission system is configured to implement conversation consultation and media consultation with the MMS proxy server **20** through the SIP protocol and the SDP protocol, and to establish an MSRP transmission channel (apparently, the MSRP transmission channel accords with MSRP protocols and messages transmitted in the MSRP transmission channel should accord with the MSRP protocols) with the MMS proxy server **20;** and the multipage MMSs between the SIP terminal **10** and the MMS proxy server **20** are transmitted through the MSRP transmission channel, i.e. the SIP terminal **10** can transmit the multipage MMSs to the MMS proxy server **20** through the MSRP transmission channel and the MMS proxy server **20** can also transmit the multipage MMSs to the SIP terminal **10.**

In the present embodiment, the conversation consultation and the media consultation are performed between the SIP terminal **10** and the MMS proxy server **20** through the SIP protocol and the SDP protocol. After the consultation, the MSRP transmission channel which satisfies MSRP protocols is established between the SIP terminal **10** and the MMS proxy server **20** and transmission of multipage MMSs can be realized between the SIP terminal **10** and the MMS proxy server **20** through the MSRP transmission channel so as to transmit the multipage MMSs between the SIP terminal **10** and the MMS proxy server **20** through such standard normalization protocols as SIP protocols, SDP protocols and MSRP protocols. The present invention overcomes the disadvantage that the self-defined private protocol adopted in the prior art does not have character of standardization and intercommunity, so the communication protocol between the SIP terminal 10 and the MMS proxy server **20** has character of standardization, intercommunity and normalization.

During implementation, the transmission can includes two situations: the first situation is that the SIP terminal **10** sends the multipage MMSs to the MMS proxy server 20 and the second situation is that the SIP terminal 10 receives the multipage MMSs from the MMS proxy server **20.** The two transmission situations will be described below.

In the first situation, the SIP terminal 10 can be configured to perform the conversation consultation and the media consultation with the MMS proxy server **20** through the SIP protocol and the SDP protocol after establishing and editing the multipage MMSs, establish the MSRP transmission channel with the MMS proxy server **20** after the consultation and transmit the edited multipage MMSs to the MMS proxy server **20** through the MSRP transmission channel; and the MMS proxy server **20** can be configured to transmit the received multipage MMSs from the SIP terminal **10** to the MMS service center **30** directly and transparently, to realize transmission of the multipage MMSs of the SIP terminal.

During implementation, after editing the multipage MMSs, the SIP terminal **10** can further store the edited multipage MMSs for a period of time first, and then transmits the multipage MMSs to the MMS proxy server **20** if necessary; the MMS proxy server **20** can further store the multipage MMSs temporarily first after receiving the multipage MMSs transmitted by the SIP terminal **10** and then forwards the multipage MMSs to the MMS service center **30.**

In order to implement the transmission of the multipage MMSs more efficiently and reduce the load of the MMS proxy server **20** as much as possible, when transmitting the edited multipage MMSs to the MMS proxy server **20,** the SIP terminal **10** can convert the multipage MMSs into an SMIL format first, and then transmits multipage MMSs that satisfy SMIL standards to the MMS proxy server 20 by using the MSRP protocol.

In the second situation, after receiving multipage MMSs which needs to be transmitted to the SIP terminal 10 from other terminals, the MMS service center **30** will forward the multipage MMSs to the MMS proxy server **20.** In this way, the MMS proxy server **20** can be configured to, after receiving the multipage MMSs transmitted by the MMS service center **30** to the SIP terminal **10,** use an SIP protocol message to notify the SIP terminal **10** that there are new MMSs, and transmit the multipage MMSs to the SIP terminal **10** through the MSRP transmission channel established with the SIP terminal **10.** In this way, the SIP terminal **10** receives the multipage MMSs from other terminals; and SIP terminal **10** can be further configured to, after receiving the notification from the MMS proxy server **20,** perform the conversation consultation and the media consultation with the MMS proxy server **20** through an SIP protocol message and an SDP protocol message and establish the MSRP transmission channel after the consultation to realize reception of the multipage MMSs of the SIP terminal.

Fig. 2 is a structural diagram of an SIP terminal according to an embodiment of the present invention. The SIP terminal 10 is located in the system for transmitting multipage MMSs in Fig. 1. As shown in Fig. 2, the SIP terminal **10** can further comprise the following modules: a consultation module **102,** an establishing module **104** and a transmitting module **106,** wherein the consultation module **102** is configured to perform the conversation consultation and the media consultation with the MMS proxy server **20** through the SIP protocol and the SDP protocol; the establishing module 104 is connected to consultation module **102** and configured to, after the consultation module **102** finishes the consultation, establish the MSRP transmission channel with the MMS proxy server **20;** the transmitting module **106** is connected to the establishing module **104** and configured to send the multipage MMSs to the MMS proxy server **20** through the MSRP transmission channel or receive the multipage MMSs from the MMS proxy server **20.** In this way, the SIP terminal can transmit and receive the multipage MMSs through the standard normalization protocols including the SIP protocol, the SDP protocol and the MSRP protocol.

In the case that the SIP terminal **10** transmits the multipage MMSs, an establishing and editing module configured to establish and edit the multipage MMSs is further needed apparently. In this way, the transmitting module 106 can transmit the edited multipage MMSs to the MMS proxy server **20** through the MSRP transmission channel.

During implementation, when transmitting the edited multipage MMSs to the MMS proxy server **20,** the transmitting module 106 can convert the multipage MMSs into SMIL format first and then transmits multipage MMSs that satisfy the SMIL standards to the MMS proxy server **20.** In this way, the transmitting module **106** can be configured to convert the edited multipage MMSs into multipage MMS format integration information and media contents that satisfy the SMIL format first, wherein the multipage MMS format integration information includes page number information of the multipage MMSs, media information included in the MMSs of each page and the location, fond properties, image properties, and playing speed of media information in an interface of the SIP terminal **10;** and then transmit the multipage MMS format integration information and the media contents to the MMS proxy server **20** through the MSRP transmission channel, wherein the multipage MMS format integration information can be transmitted to the MMS proxy server **20** in a form of a media package. In this way, the MMS proxy server **20** can transmit the multipage MMS format integration information to the MMS service center directly and transparently without any parsing to reduce the load of the MMS proxy server.

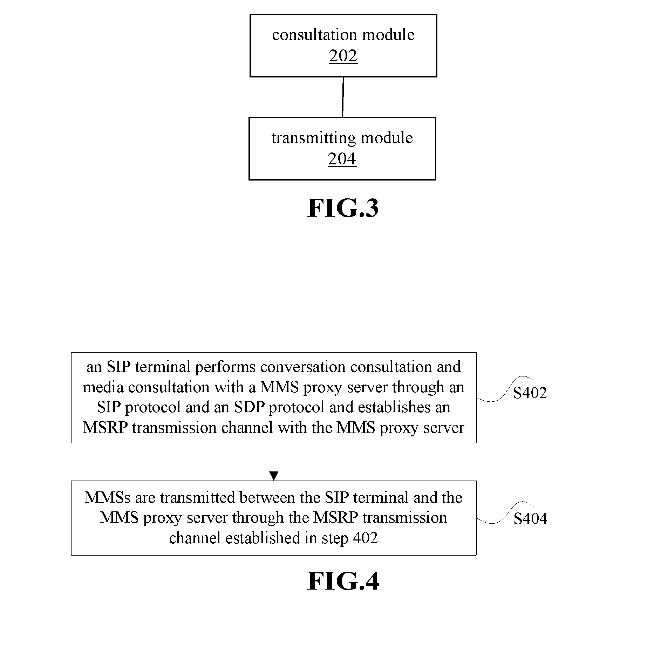

Fig. 3 is a structural diagram of a MMS proxy server according to an embodiment of the present invention. The MMS proxy server **20** is located in the system for transmitting multipage MMSs in Fig. 1. As shown in Fig. 3, the MMS proxy server **20** comprises the following modules: a consultation module **202** and a transmitting module **204,** wherein the consultation module **202** is configured to perform the conversation consultation and the media consultation with the SIP terminal **10** through the SIP protocol and the SDP protocol; the transmitting module **204** is connected to the consultation module **202** and configured to send the multipage MMSs to SIP terminal 10 through the MSRP transmission channel with the SIP terminal **10** or receive the multipage MMSs from SIP terminal **10,** wherein the MSRP transmission channel is established after the SIP terminal **10** finishes the consultation with the MMS proxy server **20.** In this way, the MMS proxy server **20** can transmit and receive the multipage MMSs through the standard normalization protocols including the SIP protocol, the SDP protocol and the MSRP protocol, wherein the transmitting module **204** is further configured to transmit the multipage MMSs from the SIP terminal **10** to the multimedia service center directly and transparently.

In the case of transmitting the multipage MMSs to the SIP terminal **10,** the transmitting module **204** can be further configured to, after receiving the multipage MMSs transmitted by the MMS service center to the SIP terminal 10, use the SIP protocol message to notify the SIP terminal 10 that there are new MMSs. In this way, the SIP terminal **10** will establish the MSRP transmission channel with the MMS proxy server 20 after receiving the notification.

Similarly, when transmitting the multipage MMSs to the SIP terminal 10 during implementation, the transmitting module **204** can also convert the multipage MMSs into the SMIL format first and then transmits multipage MMSs that satisfy the SMIL standards to the MMS proxy server **20** by the MSRP protocol. The implementation method is as above and will not be repeated here.

Fig. 4 is a flowchart of a method for transmitting multipage MMSs according to an embodiment of the present invention. The method for transmitting multipage MMSs will be described in combination with the system for transmitting multipage MMSs in Fig. 1. As shown in Fig. 4, the method includes the following steps:

Step 402: an SIP terminal **10** performs conversation consultation and media consultation with a MMS proxy server **20** through an SIP protocol and an SDP protocol and establishes an MSRP transmission channel with the MMS proxy server 20.

For example, the SIP terminal **10** and the MMS proxy server **20** exchange their respective IP addresses and ports through the SIP protocol and the SDP protocol to finish the conversation consultation and the media consultation.

Step 404: multipage MMSs are transmitted between the SIP terminal 10 and the MMS proxy server **20** via the MSRP transmission channel established in Step 402.

For example, the SIP terminal 10 can transmit the multipage MMSs to the MMS proxy server **20** through the MSRP transmission channel established in Step 402. The MMS proxy server 20 can also transmit the multipage MMSs to the SIP terminal 10 through the MSRP transmission channel established in Step 402.

In the present embodiment, the conversation consultation and the media consultation are performed between the SIP terminal **10** and the MMS proxy server **20** through the SIP protocol and the SDP protocol. After the consultation, the MSRP transmission channel which satisfies MSRP protocols is established between the SIP terminal **10** and the MMS proxy server **20** and transmission of multipage MMSs can be realized between the SIP terminal 10 and the MMS proxy server 20 through the MSRP transmission channel so as to transmit the multipage MMSs between the SIP terminal **10** and the MMS proxy server **20** through such standard normalization protocols as SIP protocols, SDP protocols and MSRP protocols. The present invention overcomes the disadvantage that the self-defined private protocol adopted in the prior art does not have character of standardization and intercommunity, so the communication protocol between the SIP terminal and the MMS proxy server has character of standardization, intercommunity and normalization.

For the SIP terminal **10,** the transmission of the multipage MMSs can include the following two situations:

The first situation is that: the SIP terminal **10** sends out multipage MMSs. In this case, the SIP terminal **10** needs to establish and edit the multipage MMSs first before Step 402. In this way, after the editing, the SIP terminal 10 can transmit the multipage MMSs to the MMS proxy server **20** instantly, or stores the multipage MMSs temporarily and then transmits them if necessary. After the transmission, the SIP terminal 10 performs the conversation consultation and the media consultation with the MMS proxy server **20** through Step 402 and establishes the MSRP transmission channel with the MMS proxy server **20.** Subsequently, in Step 404, the SIP terminal 10 transmits the edited multipage MMSs to the MMS proxy server 20 through the MSRP transmission channel to realize the scheme for implementing transmission of the multipage MMSs by the SIP terminal **10.**

In order to implement the transmission of the multipage MMSs more efficiently and reduce the load of the MMS proxy server **20** as much as possible, when transmitting the edited multipage MMSs to the MMS proxy server **20,** the SIP terminal 10 can convert the multipage MMSs into an SMIL format first, and then transmits multipage MMSs that satisfy SMIL standards to the MMS proxy server **20** by using the MSRP protocol.

For example, the SIP terminal **10** converts the edited multipage MMSs into multipage MMS format integration information and media contents that satisfy the SMIL format first, wherein the multipage MMS format integration information includes page number information of the multipage MMSs, media information included in the MMSs of each page and the location, fond properties, image properties, and playing speed of media information in the interface of the SIP terminal; and then transmits the multipage MMS format integration information and the media contents to the MMS proxy server **20** through the established MSRP transmission channel.

During actual implementation, the SIP terminal 10 can transmit the multipage MMS format integration information in a form of a media package to the MMS proxy server **20,** and the MMS proxy server **20** transmits the multipage MMS format integration information to the MMS service center directly and transparently without any parsing to reduce the load of the MMS proxy server 20.

In Step 404, after the SIP terminal 10 transmits the edited multipage MMSs to the MMS proxy server **20** through the MSRP transmission channel, the MMS proxy server **20** can transmit the received multipage MMSs to the MMS service center **30** directly and transparently so as to transmit the multipage MMSs to other terminals, or the MMS proxy server **20** can cache the received multipage MMSs temporarily first, and then forwards the multipage MMSs to the MMS service center 30.

The second situation is that the SIP terminal **10** receives the multipage MMSs. In this case, before Step 402, after receiving the multipage MMSs that need to be sent to the SIP terminal 10, the MMS service center 30 will forward the multipage MMSs to the MMS proxy server **20.** Subsequently, the MMS proxy server **20** will receive the multipage MMSs and notify the SIP terminal 10 that there are new MMSs through an SIP protocol message. In this way, after receiving the notification, the SIP terminal **10** will perform Step 402 to perform the conversation consultation and the media consultation with the MMS proxy server **20** through the SIP protocol and the SDP protocol and establish the MSRP transmission channel with the MMS proxy server **20.** Finally, in Step 404, the MMS proxy server 20 will transmit the multipage MMSs to the SIP terminal 10 through the established MSRP transmission channel to present the multipage MMSs to a user.

Similarly, in Step 404, when transmitting the multipage MMSs to the SIP terminal **10** through the established MSRP transmission channel, the MMS proxy server **20** can also convert the multipage MMSs into the SMIL format first and then transmits multipage MMSs that satisfy the SMIL standards to the SIP terminal 10 by the MSRP protocol. The implementation method is the same as above and will not be repeated here.

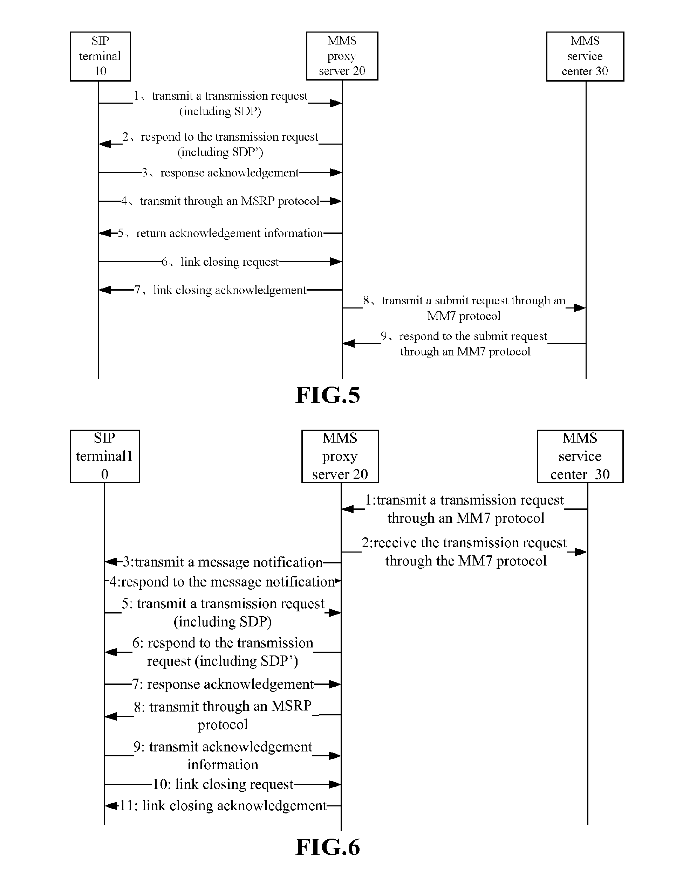

Fig. 5 is a flowchart illustrating transmission of multipage MMSs by an SIP terminal in a method for transmitting multipage MMSs according to a preferred embodiment of the present invention. A specific processing process of the transmission of the multipage MMSs by the SIP terminal in the method for transmitting multipage MMSs will be described below in combination with the system for transmitting multipage MMSs in Fig. 1. As shown in Fig. 5, the process includes the following steps:

Step 1: after editing the multipage MMSs, the SIP terminal 10 transmits a transmission request INVITE to a MMS proxy server **20,** and the INVITE includes media information (SDP) of the SIP terminal; wherein the SDP includes the IP address and port of the SIP terminal to be used in subsequent media communication.

Step 2: the MMS proxy server **20** responds through 2000K (SDP') to the transmission request (transmission request INVITE) sent by the SIP terminal; wherein the SDP' includes the IP address and port of the MMS proxy server to be used in subsequent media communication.

Step 3: the SIP terminal **10** sends an Acknowledgment (ACK) to acknowledge the response of the MMS proxy server.

Step 4: after establishing a media transmission channel between the SIP terminal 10 and the MMS proxy server **20,** the SIP terminal 10 transmits the multipage MMSs through an MSRP protocol (MSRP: SEND).

The transmitted multipage MMSs include multipage MMS format integration information and media contents, wherein the multipage MMS format integration information includes: page number information of the multipage MMSs, media information included in the MMSs of each page and information including the presentation location, fond properties, image properties, and playing speed etc. of media information on a terminal user interface.

During the transmission, the multipage MMS format integration information can be transmitted from the SIP terminal **10** to the MMS proxy server **20** in a form of a media package, and the MMS proxy server **20** transmits the multipage MMS format integration information to the MMS service center **30** directly and transparently without any parsing, so as to reduce the load of the MMS proxy server.

Step 5: after sending the MMSs, the MMS proxy server **20** returns ACK information (MSRP: 2000K);

Step 6: after finishing transmitting the MMSs, the SIP terminal **10** sends a link-closing request signalling (BYE);

Step 7: the MMS proxy server **20** acknowledge the closing of the link (2000K);

Step 8: the MMS proxy server **20** transmits the MMSs to the multimedia message service center **30** through an MM7 submit signalling (MM7_submit.REQ).

Step 9: the MMS service center **30** responds the submit (MM7_submit.RES), and the MMS transmitting process are finished.

Fig. 6 is a flowchart illustrating reception of multipage MMSs by an SIP terminal in a method for transmitting multipage MMSs according to a preferred embodiment of the present invention. A specific processing process of the reception of the multipage MMSs by the SIP terminal in the method for transmitting multipage MMSs will be described below in combination with the system for transmitting multipage MMSs in Fig. 1. As shown in Fig. 6, the process includes the following steps.

Step 1: after receiving MMSs transmitted to the SIP terminal **10,** a MMS service center 30 transmits a Deliver request (MM7_deliver.REQ) to a MMS proxy server 20.

Step 2: the MMS proxy server **20** receives the Deliver request, responds to the Deliver request (MM7_deliver.RES) and starts to receive the MMSs.

Step 3: the MMS proxy server **20** notifies the SIP terminal 10 there are new MMSs through an SIP message; if the SIP terminal **10** is offline, the MMS proxy server **20** caches the MMSs; after the SIP terminal **10** is online, the MMS proxy server **20** notifies the SIP terminal that there are new MMSs through an SIP message (MESSAGE); wherein the SIP message includes a title and a unique identifier of the MMSs, and the SIP terminal 10 obtains the MMSs through the unique identifier.

Step 4: the SIP terminal **10** responds (2000K) to the MMS notification message.

Step 5 to Step 7: media information is exchanged between the SIP terminal 10 and the MMS proxy server **20** through an SIP signalling (perform conversation consultation and media consultation) and a media transmission channel is established. It should be noted that the implementation process is the same as Step 1 to Step 3 during the transmission of the multipage MMSs by the SIP terminal in the method for transmitting multipage MMSs in Fig. 5, which will not be repeated here.

Step 8: the MMS proxy server 20 starts to transmit the MMSs to the SIP terminal 10 through an MSRP protocol (MSRP: SEND).

Step 9: after the transmission, the SIP terminal transmits ACK information (MSRP: 2000K).

Step 10: the SIP terminal **10** sends a link closing request signalling (BYE).

Step 11: the MMS proxy server **20** acknowledges the link closing request (2000K).

It can be learned from the description above that the embodiments above realize the following technical effect: the conversation consultation and the media consultation are performed between the SIP terminal **10** and the MMS proxy server **20** through the SIP protocol and the SDP protocol. After the consultation, the MSRP transmission channel which satisfies MSRP protocols is established between the SIP terminal and the MMS proxy server and transmission of multipage MMSs can be realized between the SIP terminal **10** and the MMS proxy server **20** through the MSRP transmission channel so as to transmit the multipage MMSs between the SIP terminal **10** and the MMS proxy server **20** through such standard normalization protocols as SIP protocols, SDP protocols and MSRP protocols. The present invention overcomes the disadvantage that the self-defined private protocol adopted in the prior art does not have character of standardization and intercommunity, so the communication protocol between the SIP terminal **10** and the MMS proxy server **20** has character of standardization, intercommunity and normalization. In addition, the load of the MMS proxy server can be reduced.

Obviously, those skilled in the art should understand that the modules or steps of the present invention may be implemented by general computing devices and centralized in a single computing device or distributed in a network consisting of multiple computing devices. Optionally, the modules or steps may be implemented by program codes executable by the computing devices, so that they may be stored in a storage device and executed by the computing device, and in some cases, the steps as illustrated or described may be implemented according to sequences different from those described herein, or they may be respectively made into integrated circuit modules or multiple modules or steps in the modules and steps may be made into a single integrated circuit module. By doing so, the present invention is not limited to any specific combination of hardware and software.

The above are only preferred embodiments of the present invention and should not be used to limit the present invention. For those skilled in the art, the present invention may have various modifications and changes. Any modifications, equivalent replacements, improvements and the like within the principle of the present invention shall fall within the scope of protection of the present invention.

## Claims

1. A system for transmitting a multipage Multimedia Message Service (MMS), **characterized by** comprising a Session Initiation Protocol (SIP) terminal and a MMS proxy server, wherein
the SIP terminal is configured to implement a conversation consultation and a media consultation with the MMS proxy server through an SIP and a Session Description Protocol (SDP), and configured to establish a Message Session Relay Protocol (MSRP) transmission channel with the MMS proxy server; wherein a multipage MMS between the SIP terminal and the MMS proxy server is transmitted through the MSRP transmission channel.

2. The system according to Claim 1, **characterized in that**
the SIP terminal is further configured to perform the conversation consultation and the media consultation with the MMS proxy server through the SIP message and the SDP message after establishing and editing the multipage MMS, to establish the MSRP transmission channel and transmit the edited multipage MMS to the MMS proxy server through the MSRP transmission channel; and
the MMS proxy server is configured to transmit the received multipage MMS to a MMS service center directly and transparently.

3. The system according to Claim 1 or 2, **characterized in that**
the MMS proxy server is further configured to, after receiving the multipage MMS transmitted by the MMS center to the SIP terminal, use an SIP message to notify the SIP terminal, and transmit the multipage MMS to the SIP terminal through the MSRP transmission channel; and
the SIP terminal is configured to, after receiving the notification, perform the conversation consultation and the media consultation with the MMS proxy server through an SIP message and an SDP message, and establish the MSRP transmission channel.

4. A Session Initiation Protocol (SIP) terminal, **characterized by** comprising:
a consultation module, configured to perform a conversation consultation and a media consultation with a Multimedia Message Service (MMS) proxy server through an SIP and a Session Description Protocol (SDP);
an establishing module, configured to, after the consultation module finishes the conversation consultation and the media consultation, establish a Message Session Relay Protocol (MSRP) transmission channel with the MMS proxy server; and
a transmitting module configured to, through the MSRP transmission channel, send a multipage MMS to the MMS proxy server or receive a multipage MMS from the MMS proxy server.

5. A Multimedia Message Service (MMS) proxy server, **characterized by** comprising:
a consultation module, configured to perform a conversation consultation and a media consultation with a Session Initiation Protocol (SIP) terminal through an SIP and a Session Description Protocol (SDP); and
a transmitting module, configured to, through a Message Session Relay Protocol (MSRP) transmission channel with the SIP terminal, send a multipage MMS to the SIP terminal or receive a multipage MMS from SIP terminal, wherein the MSRP transmission channel is established by the SIP terminal after the conversation consultation and the media consultation, are finished.

6. A method for transmitting multipage Multimedia Message Service (MMS), **characterized by** comprising:
a Session Initiation Protocol (SIP) terminal performing a conversation consultation and a media consultation with an MMS proxy server through a SIP and a Session Description Protocol (SDP) and establishing a Message Session Relay Protocol (MSRP) transmission channel with the MMS proxy server; and
transmitting a multipage MMS between the SIP terminal and the MMS proxy server though the MSRP transmission channel.

7. The method according to Claim 6, **characterized in that**
before the SIP terminal performs the conversation consultation and the media consultation with the MMS server through the SIP and the SDP, the method further comprises: the SIP terminal establishing and editing the multipage MMS; and
transmitting the multipage MMS between the SIP terminal and the MMS proxy server though the MSRP transmission channel further comprises: the SIP terminal transmitting the edited multipage MMS to the MMS proxy server though the MSRP transmission channel.

8. The method according to Claim 7, **characterized in that** after the SIP terminal transmitting the edited multipage MMS to the MMS proxy server though the MSRP transmission channel, the method further comprises:
the multimedia message proxy server transmitting the received multipage MMS to the MMS service center directly and transparently.

9. The method according to any one of Claims 6 to 8, **characterized in that** before the SIP terminal performing the conversation consultation and the media consultation with the MMS proxy server through the SIP and the SDP, the method further comprises:
after receiving a multipage MMS which needs to be sent to the SIP terminal, the MMS service center forwarding the multipage MMS which needs to be sent to the SIP terminal to the MMS proxy server; and
the MMS proxy server receiving the multipage MMS which needs to be sent to the SIP terminal and notifying the SIP terminal through the SIP message.

10. The method according to Claim 6, **characterized in that** transmitting the multipage MMS between the SIP terminal and the multimedia message proxy server through the MSRP transmission channel comprises:
the MMS proxy server transmitting the multipage MMS to the SIP terminal through the MSRP transmission channel.

11. The method according to Claim 7 or Claim 10, **characterized in that** transmitting the multipage MMSs through the MSRP transmission channel comprises:
converting the multipage MMS into multipage MMS format integration information and media contents that satisfy the Synchronized Multimedia Integration Language (SMIL) format, wherein the multipage MMS format integration information comprises: page number information of the multipage MMSs, media information comprised in the MMSs of each page and the location, fond properties, image properties, and playing speed of media information in an interface of the SIP terminal; and
transmitting the multipage MMS format integration information and the media contents through the MSRP transmission channel.

12. The method according to Claim 11, **characterized in that** the multipage MMS format integration information is transmitted in a form of a media package.
